Europäisches Patentamt

European Patent Office

Office européen des brevets

(11) Publication number: **0 365 743**
**A1**

## EUROPEAN PATENT APPLICATION

(21) Application number: 89110395.4

(51) Int. Cl.5: **B62D 13/02** , **B62D 13/04**

(22) Date of filing: 08.06.89

(30) Priority: 25.10.88 IT 6795388

(43) Date of publication of application:
02.05.90 Bulletin 90/18

(84) Designated Contracting States:
AT CH DE ES FR GB LI NL

(71) Applicant: INDUSTRIE COMETTO S.p.A.
Via Cuneo, 20
I-12011 Borgo san Dalmazzo(IT)

(72) Inventor: Fabbro, Bruno
Via Tesoriere
12011 Borgo San Dalmazzo(IT)

(74) Representative: Jorio, Paolo et al
STUDIO TORTA Società Semplice Via Viotti 9
I-10121 Torino(IT)

(54) A device for steering the wheels of an axle of a vehicle bogie, in particular for a trailer.

(57) A steering bogie (1) is rotatable with respect to the vehicle chassis (4) about a first substantially vertical axis (3) and the device comprises: a bar (16) fixed to this chassis and the axis of which is parallel to the longitudinal axis of the chassis itself, a plate (17) rotatable with respect to the bogie about a second vertical axis (18) and which is pivoted to a steering mechanism control rod (9) and is connected in an articulated manner to one end of the said bar; the pivot axis (22) between the plate and the said control rod and the connection axis (33) between the plate and the end of the bar are located on opposite sides of the vertical axis (18) of the bogey and are substantially disposed in the same plane as that which contains the said axis; the articulated connection between the end of the bar (16) and the plate (17) is achieved with articulation means (26, 27) which allow the plate to turn with spherical motion with respect to the said end of the bar and, simultaneously, allow the plate itself to displace with respect to the bar in the first-defined plane.

Fig.1

# A DEVICE FOR STEERING THE WHEELS OF AN AXLE OF A VEHICLE BOGIE, IN PARTICULAR FOR A TRAILER

The present invention relates to a device for steering the wheels of one axle of a vehicle bogie, in particular for a trailer or a semi-trailer which has a chassis and at least one bogie rotatable with respect to the chassis about a vertical axis.

Known devices of this type normally comprise first members which are fixed to the vehicle chassis and second members which are carried by the bogie the axle of which is to be steered. The second members are articulated to the first and also to a steering mechanism control rod in such a way that, when the axis of the vehicle chassis tends to rotate with respect to the axis of the bogie frame, the first members control rotation and displacement of some of the second members for the purpose of causing transverse translation of the steering mechanism control rod which in turn determines the steering of the wheels of the axle.

Devices of the said type have various disadvantages.

First of all, the steering angle which is imparted by the device to the wheels of the axle is rather modest, of the order of $15°$. Moreover, such devices are constructionally complex, and not very reliable because of the large number of elements of which they are composed and the manner of connection between the elements themselves.

The object of the present invention is that of providing a device for steering the wheels of one axle of a vehicle bogie of the type first briefly described, by means of which it is possible to eliminate the above-mentioned disadvantages.

According to the invention there is therefore provided a device for steering the wheels of a vehicle bogie axle, in particular for a trailer, provided with a chassis and at least one bogie rotatable with respect to the chassis about a first vertical axis, characterised by the fact that it includes a bar fixed to the said vehicle chassis and the axis of which is parallel to the longitudinal axis of the vehicle chassis, a plate rotatable with respect to the said bogie about a second vertical axis which is pivoted to a steering mechanism control rod and is connected, in an articulated manner, to one end of the said bar, the pivot axis between the said plate and the said control rod and the connection axis between the said plate and the said end of the bar being disposed on opposite sides of the said second vertical axis of the bogie and contained substantially in the same plane as that containing the said axis, the said articulated connection between the said end of the bar and the said plate being effected with articulation means which allow the plate to turn with spherical motion with respect to the said end of the bar and, simultaneously, allows the said plate to displace with respect to the said bar in the said plane.

For a better understanding of the device of the present invention there is now given a more detailed description of it with reference to the attached drawings, in which:

Figure 1 represents a plan view of the device of the invention and of a part of the vehicle bogie one axle of which is to be steered by the device;

Figures 2 and 3 are schematic plan views which illustrate the device in a rest configuration and in a configuration with the wheels completely steered;

Figure 4 is a longitudinal section taken on the line IV-IV of the device;

Figure 5 is a plan view from above of the vehicle bogie to which the device is fitted;

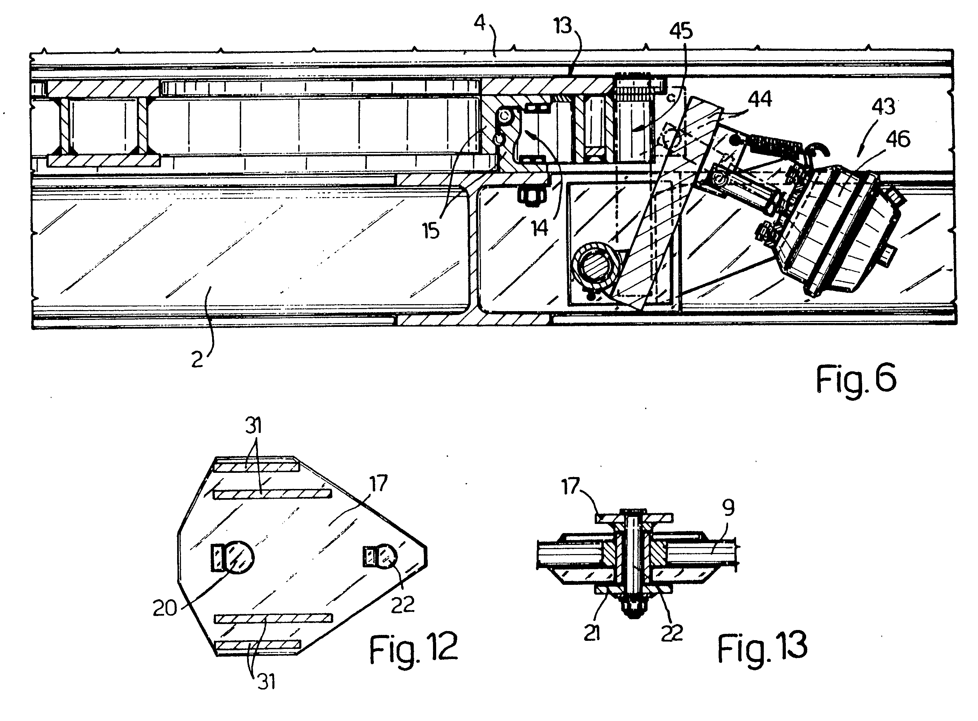

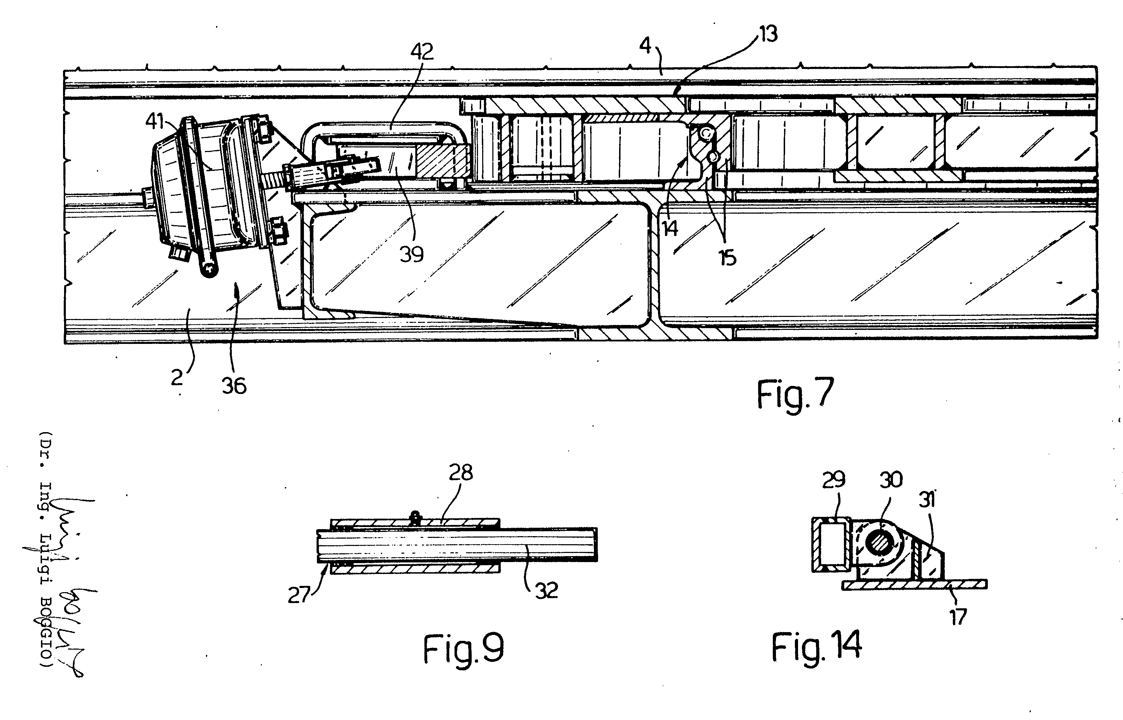

Figures 6 and 7 illustrate, on an enlarged scale, some parts of the section of Figure 4; and

Figures 8 to 14 are sections of constructional details of the device taken on the lines from VIII-VIII to XIV-XIV.

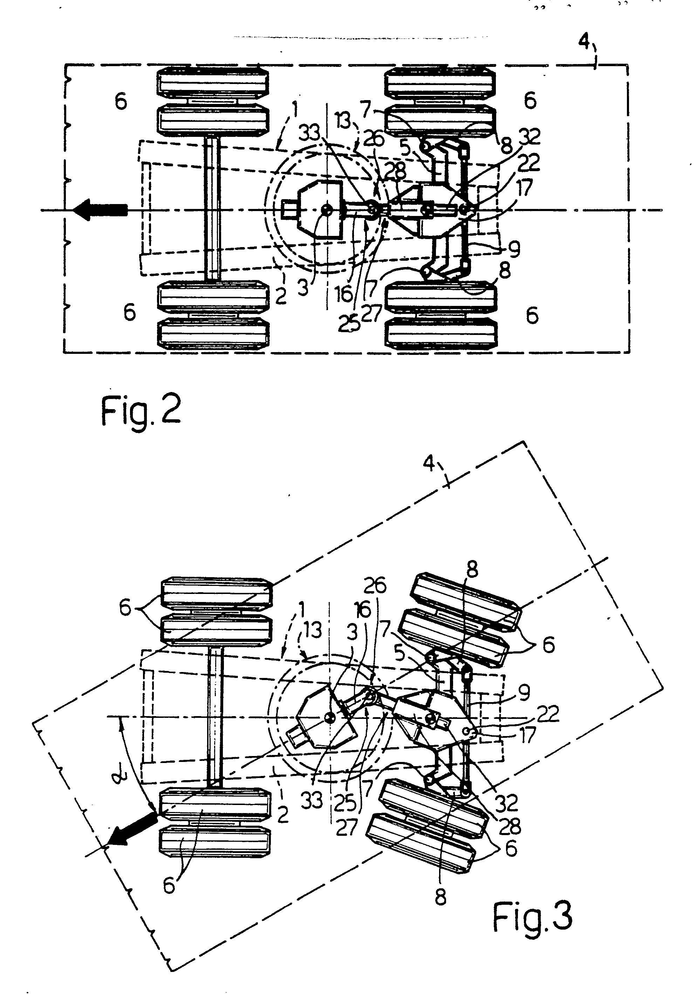

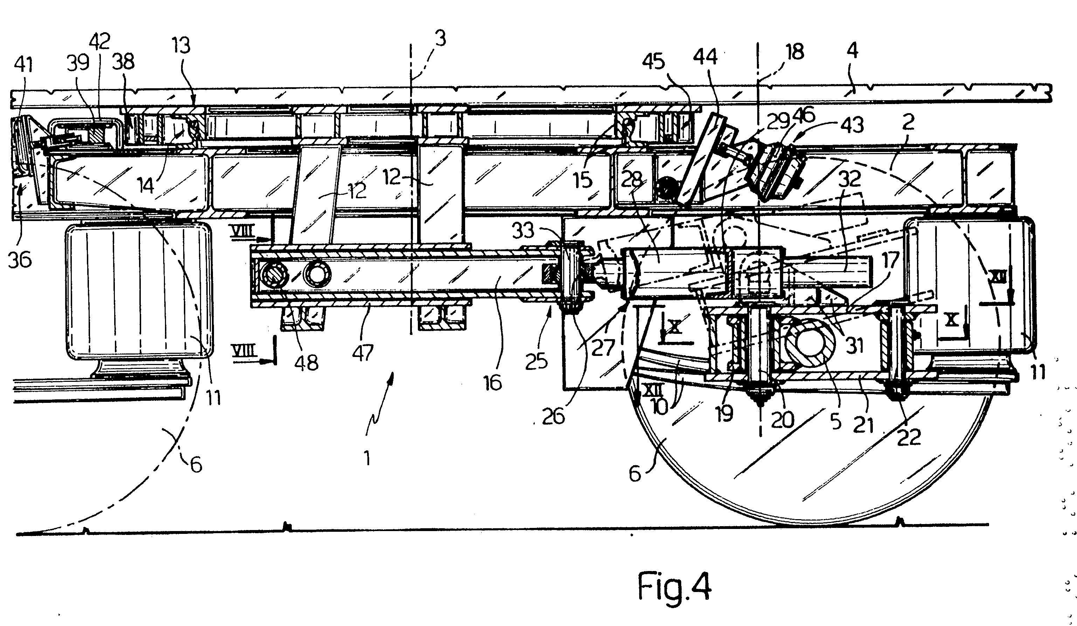

The device of the invention is operable to control steering of a bogie 1 (Figures 2 and 4) provided with a frame 2 which is rotatable about a substantially vertical axis 3 with respect to the chassis 4 of a vehicle, conveniently a trailer or semi-trailer; the vehicle chassis, only a part of which has been shown in the drawings, can be of any type.

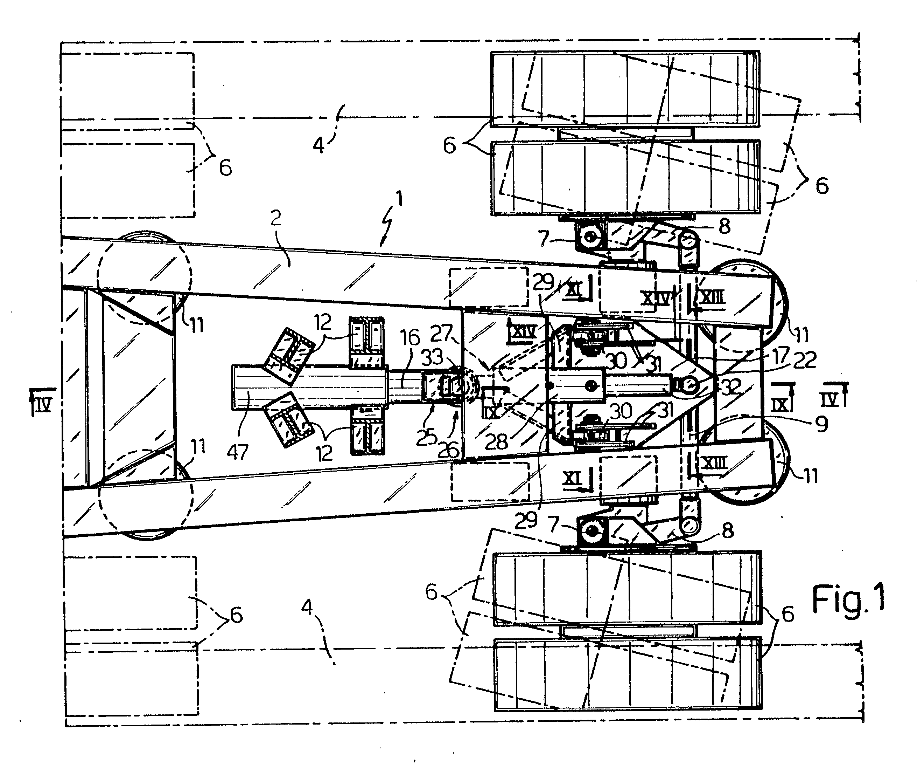

Each bogie with which the vehicle chassis is provided conveniently comprises at least one pair of axles, of which in the drawings only one (Figure 4) is visible, indicated with the reference numeral 5, to which are connected corresponding wheels 6. The wheels of one of these axles, the axle 5, are steering wheels as is clearly seen from Figures 1 and 3; conveniently the stub axles which carry the wheels on each side of the bogie are pivoted by means of corresponding pivot pins 7 to the axle itself and are provided with operating levers 8 adapted to be connected pivotally to a corresponding steering mechanism control rod, indicated 9; this thus has an axis disposed transversely with respect to the bogie 1 and is movable in this direction to control the steering of the wheels 6 in a known manner.

Each axle is connected to the bogie frame 2 in any suitable way, conveniently by interposing between this and the frame a suitable resilient suspension conveniently comprising leaf springs 10 and damper elements 11 of elastomeric material or hydraulic, pneumatic or mechanical suspensions.

To allow rotation of the bogie 1 with respect to the vehicle chassis 4 about the axis 3 the bogie is conveniently provided with a platform 13 on which the chassis 4 rests and which is rotatable with respect to the bogie frame 2, being supported with respect to it by a rolling element bearing 14: this latter, as is clearly seen in Figure 4, can conveniently comprise a pair of thrust bearings 15 between the tracks of which is interposed a ring of rolling bodies.

The device of the invention substantially comprises a bar 16 which is fixed to the vehicle chassis 4, being rigidly connected to the platform 13 by means of a plurality of struts 12. The axis of this bar is substantially parallel to the longitudinal axis of the vehicle chassis as is clearly seen in Figures 1 and 4. The device further includes a plate 17 which is rotatable with respect to the bogie 1 about a second vertical axis 18. To allow rotation of this plate about the said axis the axle 5 is provided with a bracket 19 which carries a pin 20 whilst the plate 17 is connected to another plate 21 and both plates are pivoted to the pin 20 the first being disposed above and the second below the axle 5 as is clearly seen in Figure 4. The assembly of the two plates 17 and 21 is also pivoted by means of a pin 22 to the steering mechanism control rod 9. The assembly of these two plates is further connected in an articulated manner to the end 25 of the bar 16. This connection is essentially achieved utilising a ball joint 26 and an axial joint 27; this second joint substantially comprises a sleeve 28 which is connected, by means of a crosspiece 29, to tongues 30 (Figure 1) pivoted to corresponding brackets 31 carried by the plate 17; this axial joint further includes a rod 32 axially movable within the sleeve 28, and between one end of this rod and the end 25 of the bar 16 the ball joint 26 is interposed, being connected to the end of the bar by means of a pin 33. Therefore, as is seen in the drawings, the pivot axis between the plate 17 and the steering mechanism control rod 9 (the axis of the pin 22) and the connection axis of this plate with the end 25 of the bar (axis of the pin 33) are disposed on opposite sides of the vertical axis 18 of the bogie and are contained substantially in the same plane as that which contains this axis; this geometric condition can be seen easily from Figures 1 and 4.

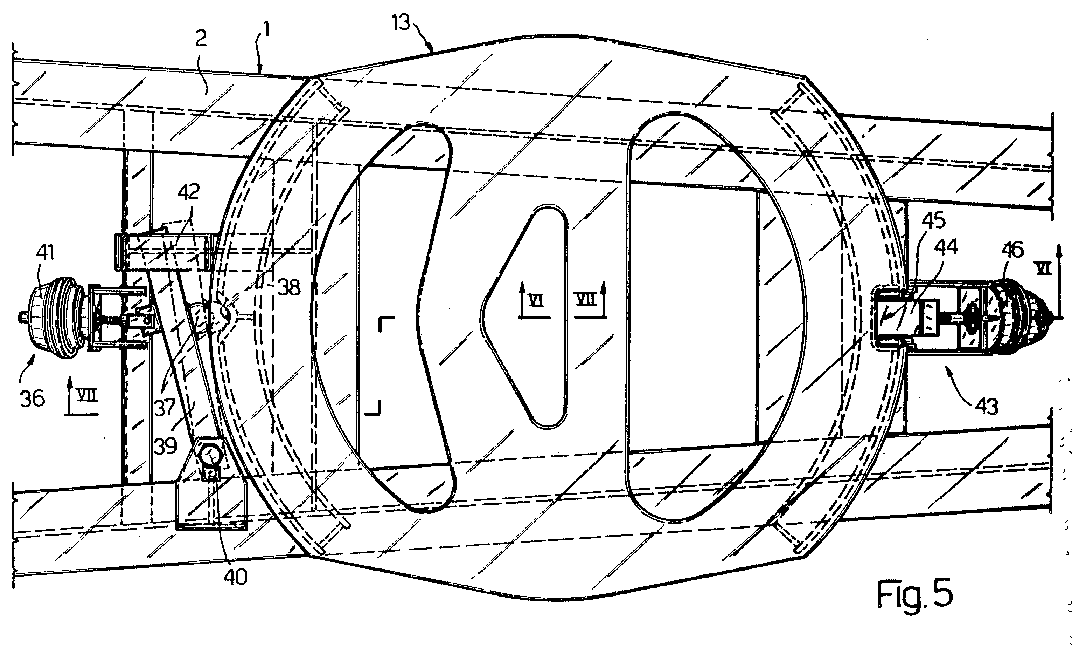

According to the invention there are provided means generally indicated 36 adapted to maintain the platform 13 in a fixed angular position with respect to the frame 2 (Figure 5). Such means conveniently include a pawl 37 adapted to enter a corresponding detent 38 formed on the peripheral part of the platform; this pawl is fixed to a lever 39 pivoted by a pin 40 to the frame of the bogie and thrust towards the platform by the action of a pneumatic cylinder 41: conveniently the free end of the lever 40 is guided by a suitable bracket 42.

Other means indicated 43 (Figure 5) are adapted to hold the platform fixed in a predetermined position with respect to the frame; these comprise (Figure 4) a lever 44 the free end of which is adapted to be introduced into a corresponding cavity 45 formed on the peripheral part of the platform 13; this lever is thrust towards the interior of the cavity by the action of a corresponding pneumatic cylinder 46.

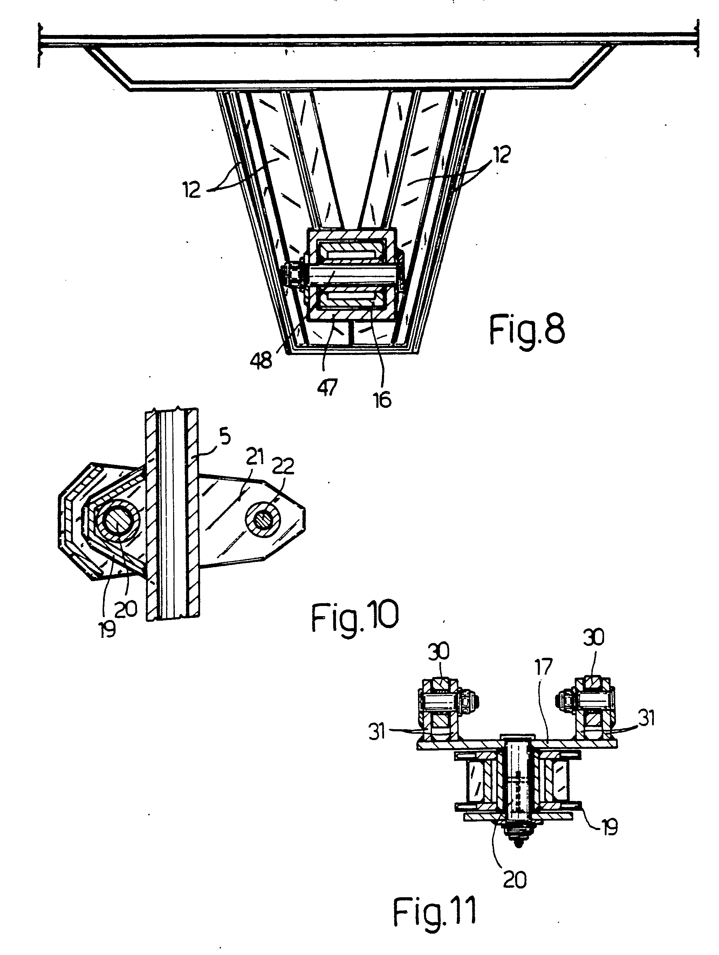

Conveniently, as is clearly seen from Figures 1 and 8, the bar 16 is supported with respect to the platform 13 by interposing a sleeve 47 between this and the struts 12, and the bar is fixed with respect to the sleeve by utilising transverse pins 48 (Figure 8).

The operation of the device described is as follows.

When the vehicle encounters a curve because of the steering action which is imposed on the vehicle by the first axle of the bogie which is steered, the axis of the vehicle chassis 4 tends to form a certain angle with respect to the axis of the frame 2 (Figure 3) of the carriage, the angle indicated α in Figure 3. As soon as this relative rotation occurs the platform 13 which is fixed to the chassis 4 tends to rotate about the axis 3 with respect to the bogie frame 2 drawing with it the bar 16 as is clearly seen in Figure 3; therefore the end 25 of this bar causes the plate 17 to turn about the axis 18 (Figure 4) of the bogie via the connection made by the ball joint 26, as is clearly visible in Figure 4. Since, during rotation of the bar 16, the path of the axis of the pin 33 connected to the end of this bar substantially describes an arc of a circle the centre of which is contained on the axis 3, this simultaneously causes a relative translation of the parts of the axial joint 27 and, therefore, a relative axial translation of the rod 32 with respect to the sleeve 28 of this joint. Consequently the assembly of the two plates 17 and 21, rigidly connected together, turns about the axis 18 causing translation, substantially in the transverse direction with respect to the bogey 1, of the steering mechanism control rod 9; upon this latter translation the lever 8 is rotated about the axis 7 to command steering of the wheels 6 of the axle 5. The relative position of the various members of the device at the end of the steering motion is visible in Figure 3.

When the vehicle is running in a straight path the means 36 tend to maintain the platform 13 in a fixed angular position with respect to the frame 2 of the bogie 1 such as to dispose the axis of the bar 16 in the direction of the longitudinal axis of the frame 2 and therefore coincident with the axis of the plate 17 and the axial joint 28 (configuration of Figure 2). An angular displacement of the platform 13 with respect to the frame 2 of the bogie 1, acting to alter this straight ahead configuration, can only be obtained when a suitable torque is applied between the platform and the frame sufficient to release the pawl 37 from the detent 38.

The means 43 for stopping rotation of the platform 13 are normally disactivated during forward running of the vehicle and therefore the various parts which compose such means are located in the configuration represented in Figure 4, in which complete rotation of the platform 13 with respect to the frame 2 is allowed. When the vehicle must be reversed the means 43 are activated to bring the free end of the lever 44 into the corresponding cavity 45 to lock relative rotation of the platform 13 with respect to the frame 2. In these conditions, as is known, the reversing manoeuvre of the vehicle is facilitated.

It has been found that with the device of the invention the angles of rotation which can be imparted to the wheels 6 during steering are very much greater, of the order of 30°: this favourable result is obtained because of the structure of the device itself the members of which do not interfere with one another even in the presence of large steering angles. The device is, moreover, very simple, small and has demonstrated a high reliability in use.

It is evident that the embodiment of the invention which has been described can have modifications and variations introduced thereto, both as to form and as to arrangement of the various parts, without departing from the ambit of the invention itself.

## Claims

1. A device for steering the wheels of an axle (5) of a vehicle bogie (1), in particular for a trailer, provided with a chassis (4) and at least one bogie (1) rotatable with respect to the chassis (4) about a first vertical axis (3), characterised by the fact that it includes a bar (16) fixed to the said vehicle chassis (4) and the axis of which is parallel to the longitudinal axis of the vehicle chassis, a plate (17) rotatable with respect to the said bogie about a second vertical axis (18), which is pivoted to a steering mechanism control rod (7, 8, 9) and is connected, in an articulated manner, to one end (25) of the said bar (16), the pivot axis (22) between the said plate (17) and the said control rod (9) and the connection axis (33) between the said plate (17) and the said end (25) of the bar (16) being disposed on opposite sides of the said second vertical axis (18) of the bogie (1) and contained substantially in the same plane as that which contains the said axis, the said articulated connection between the said end (25) of the bar (16) and the said plate (17) being achieved with articulation means (26, 27) which allow the plate (17) to turn with spherical motion with respect to the said end (25) of the bar (16) and, simultaneously, the said plate (17) to displace with respect to the said bar (16) in the said plane.

2. A device according to Claim 1, characterised by the fact that the said articulation means (26, 27) comprise a ball joint (26) and an axial joint (27) connected together.

3. A device according to Claim 2, characterised by the fact that the said axial joint (27) comprises a sleeve (28) connected to the said plate (17) and a rod (32) slidable within the said sleeve, the said ball joint (26) being interposed between the said end (25) of the said bar (16) and one end of the said slidable rod (32).

4. A device according to Claim 2 or Claim 3, characterised by the fact that the said sleeve (28) of the said axial joint (27) is connected to the said plate (17) by means of at least one pivot having a horizontal axis orthogonal to the longitudinal axis of the plate.

5. A device according to Claim 4, characterised by the fact that said sleeve (28) has two tongues (30) fixed thereto, each of which is pivoted to a corresponding bracket (31) carried by the said plate.

6.. A device according to any preceding Claim, in which the said bogie (1) includes a frame (2) and at least one pair of axles resiliently connected to the said frame, characterised by the fact that the said rotatable plate (17) is pivoted to a pin (20) having a vertical axis fixed to one of the said axles (5), the said plate (17) being disposed above the said axle and a second plate (21) disposed beneath the said axle (5) and parallel to the said first being connected to it, and the said vertical axis pin (20) being supported by a bracket (19) fixed to the said axle.

7. A device according to any preceding Claim, characterised by the fact that the said steering mechanism control rod (9) is disposed with its axis orthogonal to the longitudinal axis of the said bogie frame (2), is pivoted to the said plate (17) at a midpoint and is pivoted at its ends to corresponding levers (8) fixed to stub axles of the wheels (6) of the said axle (5) of the bogie.

8. A device according to any preceding Claim, characterised by the fact that the said bar (16) is fixed to a platform (13) rotatable about the said first vertical axis (3), a rolling element bearing (14) being interposed between the said platform and the said frame (2) of the bogie.

9. A device according to any preceding Claim, characterised by the fact that it includes thrust means (36) adapted to maintain the said rotatable platform (13) in a fixed angular position with respect to the said bogie frame (2).

10. A device according to Claim 9, characterised by the fact that the said thrust means (36) comprise a first pawl (37) adapted to be inserted into a detent (38) formed on the peripheral part of the said platform (13) and carried by a lever (39) actuated by a pneumatic cylinder (41).

11. A device according to any preceding Claim, characterised by the fact that it includes locking means (43) adapted to prevent rotation of the said platform (13) with respect to the said bogie frame (2).

12. A device according to Claim 11, characterised by the fact that the said locking means (43) comprise a lever (44) one end of which is adapted to be inserted into a corresponding cavity (45) formed on the peripheral part of the said platform (13) and which is actuated by a pneumatic cylinder (46).

Fig.1

(Dr. Ing. Luigi BOGGIO)

Fig.2

Fig.3

(Dr. Ing. Luigi BOGGIO)

Fig.4

EP 0 365 743 A1

(Dr. Ing. Luigi BOGGIO)

Fig. 5

EP 0 365 743 A1

(Dr. Ing. Luigi BOGGIO)

Fig.6

Fig.12

Fig.13

EP 0 365 743 A1

(Dr. Ing. Luigi BOGGIO)

Fig.7

Fig.14

Fig.9

(Dr. Ing. Luigi BOGGIO)

Fig.8

Fig.10

Fig.11

(Dr. Ing. Luigi BOGGIO)

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-85146 (ACKERMANN FRUEHAUF)<br>* abstract; figures 3-8 * | 1, 2, 6, 8 | B62D13/02<br>B62D13/04 |
| A | DE-A-1480181 (SCHEUERLE)<br>* claim 1; figures 1, 2 * | 1, 2 | |
| A | FR-A-2418138 (ACKERMANN FRUEHAUF)<br>* page 6, line 25 - page 7, line 5; figure 5 *<br>* page 7, line 32 - page 8, line 4; figure 8 * | 1, 2, 7, 8 | |
| A | FR-A-1549786 (DE LIRARZA INDA)<br>* the whole document * | 9, 10 | |
| A | US-A-2793052 (HAZLEHURST)<br>* column 2, lines 49 - 56; figures 2, 3 *<br>* column 3, lines 30 - 44 * | 11, 12 | |

TECHNICAL FIELDS SEARCHED (Int. Cl.5)

B62D

The present search report has been drawn up for all claims

| Place of search | Date of completion of the search | Examiner |
|---|---|---|
| THE HAGUE . | 16 JANUARY 1990 | MYON G.J-P. |